# EUROPÄISCHE PATENTSCHRIFT

(11) **EP 2 355 063 B1**
(45) Veröffentlichungstag und Bekanntmachung des Hinweises auf die Patenterteilung: **02.10.2019**
(21) Anmeldenummer: 10152694.5
(22) Anmeldetag: 04.02.2010
(51) Int. Cl.: G07G 1/00, G06Q 20/00, G06Q 30/00

(54) **Kassensystem für den Einzelhandel mit automatischer Berücksichtigung von Preisnachlässen auf eine flexible und Kundendaten schützende Weise**
Check out system for retail with automatic consideration of discounts in a flexible system which protects customer data
Système de caisse pour la vente au détail avec prise en compte automatique de rabais de manière flexible et protégeant les données des clients

(43) Veröffentlichungstag der Anmeldung: 10.08.2011
(73) Patentinhaber: valuephone GmbH, 08261 Schöneck (DE)
(72) Erfinder: Gläß, Rainer, 08261, Schöneck (DE)
(74) Vertreter: Zenz Patentanwälte Partnerschaft mbB

(56) Entgegenhaltungen:
- WO-A1-2009/037472
- WO-A2-00/39657
- GB-A- 2 393 014
- US-A1- 2004 230 593

## Beschreibung

Die Erfindung betrifft ein Kassensystem für den Einzelhandel, dass wenigstens eine Kassenvorrichtung eines Einzelhändlers mit einer Kassendatenverarbeitungseinrichtung und Eingabevorrichtungen zum Erfassen einer Artikelidentifikation wenigstens eines Artikels, wobei die Kassendatenverarbeitungseinrichtung in Abhängigkeit von der wenigstens einen erfassten Artikelidentifikation einen zu bezahlenden Betrag berechnet, und ein mit der Kassendatenverarbeitungseinrichtung über ein Datenfernübertragungsnetzwerk gekoppeltes Datenverarbeitungssystem umfasst, wobei die Kassendatenverarbeitungseinrichtung Preisnachlassdaten bei der Berechnung des zu bezahlenden Betrags berücksichtigt.

Aus der Patentschrift DE 44 33 569 B4 ist ein elektronisches papierloses Coupon-System bekannt, dass die Herausgabe und Einlösung eines elektronischen Coupons innerhalb eines Ladenlokals ohne die Notwendigkeit gestattet, den Coupon auf Papier auszuducken. Das in dieser Druckschrift beschriebene System wird innerhalb des Ladenlokals eines Einzelhändlers installiert. Am Griff eines Einkaufswagens wird eine Kommunikationseinheit mit einer Steuerkonsole und einem Bildschirm befestigt. Auf dem Bildschirm werden dem Kunden während seines Rundgangs durch das Ladenlokal Coupondaten angezeigt, wobei insbesondere solche Coupons angezeigt werden, die die in der Nähe des Aufenthaltsorts des Einkaufswagens befindlichen Waren betreffen. Die Coupons spezifizieren Preisnachlässe dieser Waren. Möchte der Kunde einen solchen Coupon nutzen, so kann er diesen während der Anzeige auf dem Bildschirm auswählen. Die ausgewählten Coupons (Produktidentifikation und Rabatt) werden dann in einer Datei der Kommunikationseinheit gespeichert. Die Kommunikationseinheit kann anschließend über eine Schnittstelle mit der Kassenvorrichtung kommunizieren. Wenn der Kunde sich an der Kasse befindet und die im Einkaufswagen befindlichen Waren von einem Warenscanner gescannt werden, berücksichtigt die Kasse automatisch die Coupon-Rabatte aus der von der Kommunikationseinheit empfangenen Datei. Dieses bekannte System hat verschiedene Nachteile. Es ist auf ein Ladenlokal beschränkt, erfordert zusätzliche Technik an jedem Einkaufswagen (was mit erheblichen Kosten verbunden ist) und gestattet die Auswahl der Rabatt-Coupons durch den Kunden ausschließlich während des Rundgangs durch das Ladenlokal.

Aus der Patentschrift DE 696 20 451 T2 ist ein "System und Verfahren zum Bereitstellen von Einkaufshilfen und Anreizen für Kunden durch ein Computernetzwerk" bekannt. Die Druckschrift beschreibt ein Verfahren zur Coupon-Übermittlung (Verfahren zum Verteilen von "Kaufanreizen"), bei dem sich zunächst ein Kunde ausgehend von seinem Rechner über ein Datenkommunikationsnetzwerk bei einem entfernten Zentralrechner einloggt, wobei ihm eine individuelle Kundenidentifikation zugeordnet wird. Dabei gibt der Kunde persönliche Daten ein. An den Computer des registrierten Kunden werden dann mehrere "Anreizangebote" übertragen, welche in dem Gebiet, in dem sich der Kunde aufhält, ausübbar sind. Der Kunde wählt aus diesen Anreizangeboten aus, wobei diese Auswahl an den Zentralrechner zurück übertragen wird. Der Zentralrechner erzeugt dann Coupons (Kaufanreize) mit der Identifikation eines durch den Kunden ausgewählten Einzelhändlers und der Identifikation des Kunden in kodierter Form und überträgt diese Coupons an den Kunden. Der Kunde druckt die Coupons anschließend aus und kann diese dann bei seinem Einkauf bei den zugeordneten Einzelhändlern verwenden. Das Verfahren hat den Nachteil, dass es auf einen Anbieter von Anreizen oder Coupons (Rabattanbieter) beschränkt ist und für den Kunden keinen Datenschutz bietet, da der Rabattanbieter vollständige Kenntnis von den Identifikationsdaten des Kunden erlangt (während der Registrierung). Ein weiterer Nachteil besteht darin, dass die Coupons ausgedruckt und von dem Kunden beim Einkaufen mitgeführt werden müssen. Das Ausdrucken bedeutet eine zusätzlich Erschwernis für den Kunden. Außerdem ist es denkbar, dass der Kunde versehentlich die Coupons nicht mitführt, so dass diese bei dem geplanten Einkauf nicht berücksichtigt werden können.

Ähnliche Nachteile hat das in der Patentschrift DE 697 37 655 T2 beschriebene "Verfahren und System zum Vertreiben elektronischer Coupons".

Die Druckschrift WO 2009/037472 A1 offenbart ein Kassensystem für den Einzelhandel, das ein Point-Of-Sale-Terminal eines Einzelhändlers mit einer Kassendatenverarbeitungseinrichtung und Eingabevorrichtungen zum Erfassen eines Kundenidentifikationscodes und zum Erfassen einer Artikelidentifikation wenigstens eines Artikels umfasst. Eine Benutzerkennzeichnung kann als Barcode oder über NFC präsentiert werden kann. Über das Internet ist die Kassendatenverarbeitungseinrichtung mit einem Datenverarbeitungssystem mit einem Transaction Server und einem Remote Server gekoppelt. Das Datenverarbeitungssystem empfängt von der Kassendatenverarbeitungseinrichtung einen erfassten Kundenidentifikationscode, ermittelt unter Verwendung dieses Codes Preisnachlassdaten und sendet diese zurück an die Kassendatenverarbeitungseinrichtung. Der Transaction Server speichert Preisnachlassdatensätze, denen jeweils Kundenidentifikationscodes zugeordnet werden können, empfängt über das Datenfernübertragungsnetzwerk den erfassten externen Kundenidentifikationscode, ermittelt unter Verwendung des empfangenen externen Kundenidentifikationscodes den zugehörigen internen Kundenidentifikationscode und zugeordnete Preisnachlassdatensätze und sendet die Preisnachlassdatensätze zurück an die Kassendatenverarbeitungseinrichtung.Aus der GB 2 393 014 A ist ein ähnliches Datenverarbeitungssystem zum Bereitstellen von Rabatten an Kunden an einem Point-of-Sale-Terminal auf der Basis einer am Point-of-Sale gelesenenen Kundenidentifikation bekannt, wobei diese Kundenidentifikation in Form eines Barcodes auf einem Mobiltelefon des Kunden angezeigt wird.

Aus der WO 00/39657 A2 ist ein elektronisches Coupon-Ausgabesystem bekannt, das elektronische Coupons mit Hilfe von mobilen Kommunikationsgeräten (z.B. Mobiltelefonen) verteilt und einlöst.

Ausgehend von dem genannten Stand der Technik ist es eine Aufgabe der Erfindung, ein Kassensystem für den Einzelhandel zu schaffen, das eine automatische Berücksichtigung von Preisnachlässen einer Mehrzahl von Rabattanbietern gestattet, deren automatische Einlösung bei Einkäufen bei beliebigen Einzelhändlern ermöglicht und außerdem eine Anpassung der Preisnachlass-Angebote der Rabattanbieter an die Kaufwünsche der Kunden bei gleichzeitiger Anonymisierung der Kundendaten gestattet.

Diese Aufgabe wird erfindungsgemäß durch ein Kassensystem mit den Merkmalen des Anspruchs 1 gelöst.

Das erfindungsgemäße Kassensystem für den Einzelhandel umfasst wenigstens eine Kassenvorrichtung und ein über ein Datenfernübertragungsnetzwerk (beispielsweise das Internet oder ein Mobilfunknetz) angekoppeltes Datenverarbeitungssystem. Die Kassenvorrichtung weist eine Kassendatenverarbeitungseinrichtung und Eingabevorrichtungen zum Erfassen eines externen Kundenidentifikationscodes und zum Erfassen einer Artikelidentifikation wenigstens eines Artikels auf, wobei die Kassendatenverarbeitungseinrichtung in Abhängigkeit von der wenigstens einen erfassten Artikelidentifikation einen zu bezahlenden Betrag berechnet. Das Datenverarbeitungssystem empfängt von der Kassendatenverarbeitungseinrichtung einen erfassten externen Kundenidentifikationscode, ermittelt unter Verwendung des empfangenen Kundenidentifikationscodes Preisnachlassdatensätze, die jeweils in Zuordnung zu einem Artikel-Identifizierer einen Preisnachlass eines Artikels kennzeichnen, und sendet diese Preisnachlassdatensätze zurück an die Kassendatenverarbeitungseinrichtung, so dass die Kassendatenverarbeitungseinrichtung die empfangenen Preisnachlassdatensätze bei der Berechnung des zu bezahlenden Betrags berücksichtigen kann. Der Artikel-Identifizierer der Preisnachlassdatensätze kann grundsätzlich gleich der von der Kassenvorrichtung erfassten Artikelidentifikation sein. Zumindest muss die Kassendatenverarbeitungseinrichtung in der Lage sein, aus dem Artikel-Identifizierer der empfangenen Preisnachlassdatensätze eine Artikelidentifikation zu ermitteln, die sie mit der (beispielsweise durch den Scanner) erfassten Artikelidentifikation des gekauften Artikels vergleichen kann. Unter einem Preisnachlass soll hier ganz allgemein jeder Rabatt oder Bonus verstanden werden, der zu einer Verringerung des zu bezahlenden Betrages führt. Der Preisnachlass oder Bonus kann ein Absolutgeldbetrag oder ein Prozentsatz sein. Das Datenverarbeitungssystem umfasst eine erste und eine zweite Server-Einrichtung. Unter einer Server-Einrichtung sollen hier ein oder mehrere Server verstanden werden, die sich auf einem Rechner befinden oder auch auf mehreren Rechnern verteilt sein können. Die erste Server-Einrichtung speichert Preisnachlassdatensatz-Identifizierer enthaltende Preisnachlassdatensätze, denen jeweils ein oder mehrere erste interne Kundenidentifikationscodes zugeordnet werden können. Dies bedeutet, dass die Kundenidentifikationscodes entweder in den Preisnachlassdatensatz aufgenommen oder diesem zugeordnet werden, indem beispielsweise die Preisnachlassdatensatz-Identifizierer den Kundenidentifikationscodes in separaten Datenstrukturen zugeordnet werden. Die ersten internen Kundenidentifikationscodes sind entweder gleich den externen Kundenidentifikationscodes oder lassen sich aus diesen eindeutig berechnen. Die erste Server-Einrichtung empfängt über das Datenfernübertragungsnetzwerk den erfassten externen Kundenidentifikationscode, ermittelt unter Verwendung des empfangenen externen Kundenidentifikationscodes den zugehörigen ersten internen Kundenidentifikationscode und zugeordnete Preisnachlassdatensätze und sendet die Preisnachlassdatensätze zurück an die Kassendatenverarbeitungseinrichtung. Selbstverständlich brauchen die gesendeten Preisnachlassdatensätze physisch nicht den in der ersten Server-Einrichtung gespeicherten Preisnachlassdatensätzen zu entsprechen; vielmehr genügt eine logisch-inhaltliche Übereinstimmung. Das Datenverarbeitungssystem umfasst ferner eine mit der ersten Server-Einrichtung gekoppelte zweite Server-Einrichtung, die Kundendaten erfasst, die dem Kunden zugeordnete Artikellisten umfassen, wobei die Artikellisten von dem Kunden gewünschte Artikel identifizieren, und den Kundendaten einen zweiten internen Kundenidentifikationscode zuordnet. Diese Artikellisten können von dem Kunden eingegebene Bezeichnungen für von ihm gewünschte Artikel enthalten; es kann sich aber auch um von dem Kunden aus vorgegebenen Bezeichnungen ausgewählte Bezeichnungen handeln. Bei den von dem Kunden gewünschten Artikeln handelt es sich vorzugsweise um solche, welche der Kunde bei einem bevorstehenden Einkauf bei einem oder mehreren verschiedenen Einzelhändlern erwerben möchte. Es kann sich hierbei um Artikelkategorien, wie beispielsweise "Brot" oder "Haarwaschmittel", handeln oder auch um Benennungen eines bestimmten Artikels eines bestimmten Anbieters. Aus den Artikellisten leitet die zweite Server-Einrichtung Artikelidentifikationsdaten ab, welche sie für einen Zugriff durch eine Datenverarbeitungseinrichtung eines Rabattanbieters bereitstellt, ohne dem Rabattanbieter einen Zugriff auf die Kundendaten (einschließlich der ursprünglichen Artikellisten) und den zweiten internen Kundenidentifikationscode zu ermöglichen. Die zweite Server-Einrichtung empfängt von dem Rabattanbieter Daten, die Preisnachlässe von wenigstens einem Artikel spezifizieren, der (in seiner Art) einem auf der Artikelliste enthaltenen Artikel entspricht. Daneben kann der Rabattanbieter selbstverständlich auch Daten übermitteln, die Preisnachlässe von anderen Artikeln spezifizieren, die nicht auf den Artikellisten enthaltenen Artikeln entsprechen. Bei dem Rabattanbieter kann es sich um den Einzelhändler selbst, eine Zentrale einer Gruppe von Einzelhändlern, einen Hersteller der Artikel oder auch um einen separaten Bonusprogrammanbieter handeln, der Bonusprogramme für mehrere Einzelhändler anbietet. Die zweite Server-Einrichtung übermittelt die Preisnachlässe spezifizierenden Daten in Zuordnung zu Daten, die die betroffenen Artikel identifizieren, an die erste Server-Einrichtung, die diese Daten als Preisnachlassdatensätze speichert. Hierbei ist es denkbar, dass die Preisnachlassdatensätze bereits von der zweiten Server-Einrichtung erzeugt und an die erste Server-Einrichtung übermittelt werden. Es ist aber auch denkbar, dass die Preisnachlassdatensätze von der ersten Server-Einrichtung aus den von der zweiten Server-Einrichtung übermittelten Daten generiert werden. Die zweite Server-Einrichtung veranlasst außerdem, dass den in der ersten Server-Einrichtung gespeicherten Preisnachlassdatensätzen erste interne Kundenidentifikationscodes zugeordnet werden, wobei sie die ersten internen Kundenidentifikationscodes aus den zweiten internen Kundenidentifikationscodes ableitet. Die zweiten internen Kundenidentifikationscodes können von den ersten internen Kundenidentifikationscodes verschieden sein, wobei eine eindeutige Zuordnung gegeben sein muss. Bei einer bevorzugten Ausführungsform sind die ersten internen Kundenidentifikationscodes gleich den zweiten internen Kundenidentifikationscodes und werden die internen Kundenidentifikationscodes aus den externen Kundenidentifikationscodes in eindeutiger Weise berechnet. Dies kann beispielsweise dadurch erfolgen, dass die externen Kundenidentifikationscodes durch ein spezielles Verschlüsselungsverfahren aus den internen Kundenidentifikationscodes abgeleitet werden. In diesem Fall stellen die externen Kundenidentifikationscodes, die dem Einzelhändler zugänglich sind, verschlüsselte interne Kundenidentifikationscodes dar, wobei der Einzelhändler nicht in der Lage ist, aus den externen Kundenidentifikationscodes die internen Kundenidentifikationscodes zu bestimmen. Dazu ist vorzugsweise ausschließlich die die externen Kundenidentifikationscodes empfangende erste Server-Einrichtung des Datenverarbeitungssystems in der Lage. Auf die erste Server-Einrichtung kann nur von der zweiten Server-Einrichtung und der Kassendatenverarbeitungseinrichtung zugegriffen werden. Hierbei ist der Zugriff durch die Kassendatenverarbeitungseinrichtung auf das Übermitteln der externen Kundenidentifikationscodes und das Empfangen der Preisnachlassdatensätze beschränkt; die Kassendatenverarbeitungseinrichtung hat keinen Zugriff auf die internen Kundenidentifikationscodes. Auch die Datenverarbeitungseinrichtung des Rabattanbieters hat ausschließlich den oben genannten Zugriff auf die zweite Server-Einrichtung.

Das erfindungsgemäße Kassensystem verzichtet darauf, von dem Kunden Rabattcoupons abzufordern, welche diesem zuvor übertragen wurden. Vielmehr empfängt das erfindungsgemäße Kassensystem lediglich einen externen Kundenidentifikationscode von dem Kunden und verwendet diesen, um sämtliche relevanten Coupons (Preisnachlassdatensätze) über ein Computernetzwerk von einer Server-Einrichtung eines Datenverarbeitungssystems abzuholen. Dies entbindet den Kunden von der Pflicht der Coupon-Verwaltung und des Mitführens der Coupons zum Einzelhändler. Dennoch wurde ein Datenschutz bezüglich der Kundendaten erreicht, da der Einzelhändler bei dem erfindungsgemäßen Kassensystem weder Kundendaten verwaltet noch in diese einsehen kann. Durch den Zugriff des Rabattanbieters, bei dem es sich um den Einzelhändler oder einem mit diesem kooperierenden Unternehmen handelt, auf die aus den Artikellisten abgeleiteten Artikelidentifikationsdaten hat der Einzelhändler bzw. der Rabattanbieter trotz der Datenschutz-Einschränkungen die Möglichkeit, die Kaufwünsche der Kunden bei der Erstellung der Preisnachlassdatensätze zu berücksichtigen.

Eine bevorzugte Ausführungsform des erfindungsgemäßen Kassensystems ist dadurch gekennzeichnet, dass den Preisnachlassdatensätzen zusätzlich Identifizierer zugeordneter Einzelhändler zugeordnet sind. Hierbei empfängt die erste Server-Einrichtung von der Kassendatenverarbeitungseinrichtung neben dem externen Kundenidentifikationscode auch einen Identifizierer des Einzelhändlers und ermittelt sie die an die Kassendatenverarbeitungseinrichtung zurückzusendenden Preisnachlassdatensätze auch unter Verwendung des empfangenen Identifizierers des Einzelhändlers. Die zweite Server-Einrichtung empfängt von dem Rabattanbieter neben den die Preisnachlässe spezifizierenden Daten zusätzlich Daten, die zugeordnete Einzelhändler spezifizieren. Dann übermittelt die zweite Server-Einrichtung die Preisnachlässe spezifizierenden Daten auch in Zuordnung zu Daten, die die zugeordneten Einzelhändler identifizieren, an die erste Server-Einrichtung. Diese vorteilhafte Weiterbildung vermeidet, dass einer Kassendatenverarbeitungseinrichtung eines Einzelhändlers Preisnachlassdatensätze übermittelt werden, die ihn nicht betreffen. Dies ist besonders dann erwünscht, wenn die erste Server-Einrichtung Preisnachlassdatensätze speichert, die einerseits demselben Kundenidentifikationscode zugeordnet sind, aber andererseits verschiedenen Einzelhändlern.

Eine weitere bevorzugte Weiterbildung des erfindungsgemäßen Kassensystems ist dadurch gekennzeichnet, dass die erste Server-Einrichtung von der Kassendatenverarbeitungseinrichtung keine erfassten Artikelidentifikationen empfängt und unter Verwendung des empfangenen externen Kundenidentifikationscodes sämtliche zugeordneten Preisnachlassdatensätze unabhängig von den zugeordneten Artikel-Identifizierern ermittelt und zurück an die Kassendatenverarbeitungseinrichtung sendet. In diesem Fall erhält die Kassendatenverarbeitungseinrichtung zunächst alle dem Kunden zugeordneten Preisnachlassdatensätze, von denen dann die Kassendatenverarbeitungseinrichtung diejenigen auswählt, die den von den Eingabevorrichtungen erfassten Artikelidentifikationen entsprechen. Auf diese Weise können die Preisnachlassdatensätze von der ersten Server-Einrichtung bereits abgerufen werden, nachdem der externe Kundenidentifikationscode erfasst worden ist, aber noch keine Artikelidentifikation oder noch nicht sämtliche Artikelidentifikationen erfasst worden sind (das heißt noch nicht sämtliche Artikel "gescannt" worden sind). Dies erlaubt es beispielsweise, dass für den Fall, dass der Kunde noch im letzten Moment (kurz vor dem Bezahlen) einen weiteren Artikel zu kaufen wünscht, dieser nicht nur erfasst werden kann, sondern auch der ggf. vorhandene Rabatt sofort in die Berechnung des Zahlbetrags einbezogen werden kann.

Bei einer anderen bevorzugten Weiterbildung des erfindungsgemäßen Kassensystems veranlasst die zweite Server-Einrichtung, dass den in der ersten Server-Einrichtung gespeicherten Preisnachlassdatensätzen erste interne Kundenidentifikationscodes zugeordnet werden, indem die zweite Server-Einrichtung die Preisnachlassdatensätze abruft und darin enthaltene Informationen einem Kunden auf Abruf zur Verfügung stellt, so dass der Kunde diese Informationen (das heißt Informationen über "Coupons")auf einem mit der zweiten Server-Einrichtung gekoppelten Datenkommunikationsgerät (beispielsweise einem Mobiltelefon oder einem PC) betrachten kann, und indem sie dann in Erwiderung des Abrufs der Informationen durch den Kunden der erste oder zweite interne Kundenidentifikationscode an die erste Server-Einrichtung übermittelt und diese veranlasst, dass den Preisnachlassdatensätzen erste interne Kundenidentifikationscodes zugeordnet werden. Diese Ausführungsform ist vorteilhaft, da sie die "Coupons" in der ersten Servereinrichtung nur dann dem Kunden zuweist, wenn dieser durch das Aufrufen oder Anfordern der Coupon-Informationen auch ein Interesse an den Coupons bekundet hat. Die Coupons werden nicht einfach dem Kunden unabhängig davon übermittelt, ob er die Rabatte wünscht oder nicht. Die Zuordnung der internen Kundenidentifikationscodes zu den Preisnachlassdatensätzen auf der ersten Server-Einrichtung erfolgt dabei unter Vermittlung der zweiten Server-Einrichtung, so dass der Kunden keinen direkten Zugriff auf die erste Server-Einrichtung erlangt.

Bei einer bevorzugten Ausführungsform des erfindungsgemäßen Kassensystems weist das Datenverarbeitungssystem eine dritte Server-Einrichtung auf, wobei die dritte Server-Einrichtung von der Kassendatenverarbeitungseinrichtung den externen Kundenidentifikationscode sowie Kassenbon-Daten empfängt, die die gekauften Artikel und den bezahlten Kaufpreis identifizieren, und die Kassenbon-Daten in Zuordnung zu dem Kundenidentifikationscode an die zweite Server-Einrichtung weiterleitet. Dies hat den Vorteil, dass die zweite Server-Einrichtung, welche die Kundendaten erfasst, aus den Artikellistenauswertungen erzeugt und an Rabattanbieter bereitstellt, von den Rabattanbietern Preisnachlassdaten empfängt und die für die Preisnachlassdatensätze in der ersten Servereinrichtung erforderlichen Daten übermittelt, nunmehr auch Kenntnis über die von einem Kunden gekauften Artikel und den hierfür bezahlten Kaufpreis hat. Sie kann auf diese Weise das Erzeugen der Coupon-Daten von diesen weiteren Informationen abhängig machen. Bei einer bevorzugten Ausführungsform veranlasst dann die zweite Server-Einrichtung, dass den in der ersten Server-Einrichtung gespeicherten Preisnachlassdatensätzen erste interne Kundenidentifikationscodes zugeordnet werden, in dem die zweite Server-Einrichtung die die gekauften Artikel identifizierenden Daten der von der dritten Server-Einrichtung empfangenen Kassenbon-Daten mit den Artikel-Identifizieren von Preisnachlassdatensätzen der ersten Server-Einrichtung vergleicht und bei Übereinstimmung der identifizierten Artikel die Preisnachlassdatensätze abruft und darin enthaltene Informationen einem Kunden auf Abruf zur Verfügung stellt, so dass der Kunde den Inhalt der Preisnachlassdatensätze auf einem mit der zweiten Server-Einrichtung gekoppelten Datenkommunikationsgerät betrachten und gewünschte Preisnachlassdatensätze auswählen kann. Dann übermittelt die zweite Server-Einrichtung Preisnachlassdatensatz-Identifizierer der von dem Kunden ausgewählten Preisnachlassdatensätze zusammen mit dem ersten oder zweiten internen Kundenidentifikationscode an die erste Server-Einrichtung und veranlasst diese, dass den entsprechenden Preisnachlassdatensätzen erste interne Kundenidentifikationscodes zugeordnet werden. Bei dieser Vorgehensweise werden dem Kunden somit Preisnachlassdatensätze (Coupons) präsentiert, sobald die zweite Server-Einrichtung Artikel-Identifizierer an die erste Server-Einrichtung übermittelt hat, die mit Artikel-Identifizierern von bestimmten Preisnachlassdatensätzen (den so genannten Checkout-Coupons) übereinstimmen, so dass diese Preisnachlassdatensätze dem Kunden dann präsentiert werden, sofern er die identifizierten Artikel zuvor gekauft hat.

Bei einer bevorzugten Ausführungsform des erfindungsgemäßen Kassensystems sind die erste und die zweite Server-Einrichtung innerhalb eines zugriffsgeschützten Computernetzwerks angeordnet (welches häufig als "Demilitarized Zone" - DMZ bezeichnet wird), wobei die Datenverarbeitungseinrichtung des Rabattanbieters sowie die Datenkommunikationsgeräte der Kunden außerhalb des zugriffsgeschützten Computernetzwerks angeordnet sind. Auch diese Maßnahme dient dem Datenschutz und der Vermeidung unerwünschter Eingriffe.

Bei einer bevorzugten Ausführungsform des erfindungsgemäßen Kassensystems umfassen die Eingabevorrichtungen der Kassenvorrichtung, die zum Erfassen des externen Kundenidentifikationscodes vorgesehen sind, einen Scanner, der einen auf einer mobilen Kommunikationseinrichtung (beispielsweise einem Mobiltelefon) des Kunden erzeugten, den externen Kundenidentifikationscode darstellenden Barcode liest. Vorzugsweise dient dieser Scanner sowohl zum Erfassen des externen Kundenidentifikationscodes als auch zum Erfassen der Artikelidentifikation (in herkömmlicher Weise). Alternativ oder zusätzlich können die Eingabevorrichtungen zum Erfassen des externen Kundenidentifikationscodes eine eine Nahfeld-Kommunikation (NFC - Near Field Communication) mit einer den externen Kundenidentifikationscode speichernden mobilen Kommunikationseinrichtung (beispielsweise Mobiltelefon) des Kunden ausführende NFC-Kommunikationsvorrichtung umfassen. Dies hat den Vorteil, dass dann, wenn der Kunde an der Kasse bezahlen möchte, die Kassenvorrichtung automatisch eine Kommunikation mit der mobilen Kommunikationseinrichtung (dem Mobiltelefon) des Kunden aufbauen kann, um den Kundenidentifikationscode abzurufen und dann sogleich die Kommunikation mit der ersten Server-Einrichtung zu beginnen.

Bei einer bevorzugten Ausführungsform des erfindungsgemäßen Kassensystems ist die zweite Server-Einrichtung über ein Datenkommunikationsnetzwerk (beispielsweise über das Internet) mit einer Datenverarbeitungseinrichtung des Kunden (beispielsweise dessen PC) verbunden, von der die zweite Server-Einrichtung Kundendaten empfängt, wobei die Kundendaten unter anderem Daten umfassen, die von dem Kunden gewünschte Artikel identifizieren. Das Datenkommunikationsnetzwerk ist beispielsweise das Internet, wobei es sich bei der Datenverarbeitungseinrichtung des Kunden beispielsweise um dessen PC handeln kann. Es ist aber auch denkbar, dass das Datenkommunikationsnetzwerk ein Mobilfunknetz umfasst und die Datenverarbeitungseinrichtung ein Mobiltelefon darstellt. Der Kunde gibt beispielsweise über die Tastatur seiner Datenverarbeitungseinrichtung Kundendaten ein, die dann an die zweite Server-Einrichtung übermittelt werden. Diese Kundendaten umfassen beispielsweise eine von dem Kunden erstellte Einkaufsliste, die an die zweite Server-Einrichtung übermittelt und von dieser in einem für eine nachfolgende Ableitung von Artikelidentifikationsdaten geeigneten Format gespeichert wird.

Eine bevorzugte Weiterbildung der zuletzt genannten Ausführungsform ist dadurch gekennzeichnet, dass die zweite Server-Einrichtung über ein Datenkommunikationsnetzwerk mit einer mobilen Kommunikationseinrichtung (beispielsweise einem Mobiltelefon) des Kunden verbunden ist, von der die zweite Server-Einrichtung Daten, die von dem Kunden gewünschte Artikel identifizieren, empfangen und an die die zweite Server-Einrichtung Daten, die von dem Kunden gewünschte Artikel identifizieren, übermitteln kann, wobei diese Daten derart ausgetauscht werden, dass die in der mobilen Kommunikationseinrichtung gespeicherten und anzeigbaren Daten, die von dem Kunden gewünschte Artikel identifizieren, mit der in der zweiten Server-Einrichtung gespeicherten Artikelliste übereinstimmen. Dadurch wird eine Synchronisation oder ständige Aktualisierung der auf der mobilen Kommunikationseinrichtung des Kunden (dem Mobiltelefon beispielsweise) anzeigbaren Artikelliste erreicht. Wenn der Kunde beispielsweise auf seinem Heim-PC eine Artikelliste erstellt oder modifiziert hat, so kann er anschließend auf seinem Mobiltelefon die entsprechend aktualisierte Liste betrachten.

Eine bevorzugte Ausführungsform des erfindungsgemäßen Kassensystems ist dadurch gekennzeichnet, dass die zweite Server-Einrichtung einen Kennzeichner erfasst (und speichert), mit dem angezeigt wird, ob der Kunde einer Weitergabe der Artikellisten-Daten an die Rabattanbieter freigegeben oder gesperrt hat. Dabei stellt die zweite Server-Einrichtung aus den Artikellisten abgeleitete Artikelidentifikationsdaten nur dann für einen Zugriff durch eine Datenverarbeitungseinrichtung des Rabattanbieters bereit, wenn der Kennzeichner dies freigibt. Hierdurch hat der Kunde die Möglichkeit, durch eine entsprechende Einstellung des Kennzeichners (beispielsweise eines bestimmten von ihm modifizierbaren Feldinhalts oder gespeicherten Bits) zu beeinflussen, ob die Daten seiner Artikellisten (beispielsweise Einkaufslisten) für eine Auswertung durch Rabattanbieter benutzt werden können oder nicht.

Bei einer bevorzugten Ausführungsform des erfindungsgemäßen Kassensystems umfasst die zweite Server-Einrichtung zumindest zwei Server. Jeder dieser beiden Server kann wiederum aus einem oder mehreren Servern bestehen, die insgesamt oder jeweils sich auf einem Computer befinden oder auf mehrere Computer verteilt sind. Ein erster Server der zweiten Server-Einrichtung erfasst die Kundendaten mit den Artikellisten und ordnet die zweiten internen Kundenidentifikationscodes zu und veranlasst, dass dem in der ersten Server-Einrichtung gespeicherten Preisnachlassdatensätzen erste interne Kundenidentifikationscodes zugeordnet werden. Der erste Server dient somit vorzugsweise primär der Erfassung der Kundendaten und der Kommunikation mit den Kunden sowie der Übertragung der von Kundeninteraktionen abhängigen Daten auf die erste Server-Einrichtung. Ein zweiter Server der zweiten Server-Einrichtung stellt die Artikelidentifikationsdaten für einen Zugriff durch einen Rabattanbieter bereit, empfängt von dem Rabattanbieter die Preisnachlässe spezifizierenden Daten und übermittelt diese Preisnachlässe spezifizierenden Daten an die erste Server-Einrichtung. Der zweite Server dient somit vorzugsweise der Kommunikation mit dem Rabattanbieter, insbesondere der Bereitstellung von Artikelidentifikationsdaten an den Rabattanbieter und der Entgegennahme von Daten des Rabattanbieters, die Preisnachlässe spezifizieren. Durch diese Trennung in einem ersten und einem zweiten Server wird eine zusätzliche Sicherheit erreicht, da Kunden einerseits und Rabattanbieter andererseits mit verschiedenen Servern kommunizieren.

Vorteilhafte und/oder bevorzugte Weiterbildungen der Erfindung sind in den Unteransprüchen gekennzeichnet.

Im Folgenden wird die Erfindung anhand von in den Zeichnungen dargestellten bevorzugten Ausführungsformen näher erläutert. In den Zeichnungen zeigen:
Figur 1 eine Übersichtsdarstellung der wesentlichen Komponenten des erfindungsgemäßen Kassensystems; und
Figur 2 eine beispielhafte Bildschirmdarstellung, die die aus den Artikellisten der Kunden abgeleiteten Artikelidentifikationsdaten für einen Rabattanbieter bereitstellt.

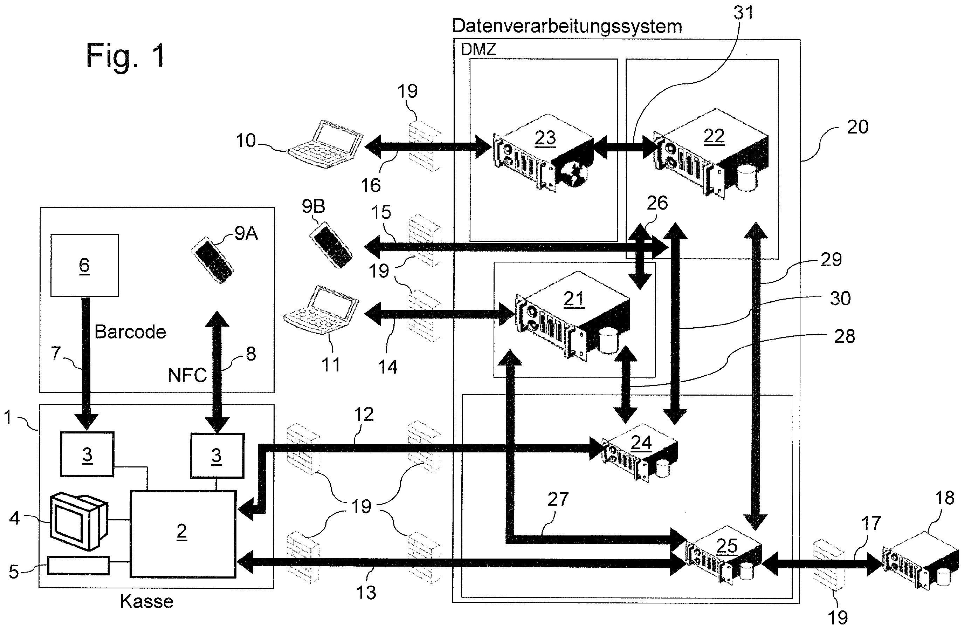

Das in Figur 1 schematisch dargestellte erfindungsgemäße Kassensystem umfasst eine Kassenvorrichtung 1 und ein mit der Kassenvorrichtung 1 gekoppeltes Datenverarbeitungssystem 20. Die Kassenvorrichtung 1, welche sich beispielsweise in einem Ladengeschäft eines Einzelhändlers befindet, umfasst eine Kassendatenverarbeitungseinrichtung 2, an welche eine Bildschirmausgabe 4 und eine Tastatur 5 angekoppelt ist. Ferner enthält die Kassenvorrichtung 1 Eingabevorrichtungen 3. Eine der gezeigten Eingabevorrichtungen 3 ist mit einem Barcode-Leser 6 gekoppelt und empfängt über eine Eingabeleitung 7 einen gelesenen Barcode, wobei es sich beispielsweise um einen auf einem gekauften Artikel aufgedruckten Barcode handeln kann. Eine weitere Eingabevorrichtung 3 ist eine Nahfeldkommunikationseinrichtung (NFC = Near Field Communication). Über eine durch den Pfeil 8 veranschaulichte Nahfeldkommunikation kann diese Eingabevorrichtung 3 beispielsweise mit einem entsprechend ausgerüsteten Mobiltelefon 9A eines Kunden kommunizieren. Selbstverständlich enthält die Kassenvorrichtung 1 weitere übliche Elemente, wie beispielsweise ein Transportband für aufzulegende Artikel (Waren), eine Geldkartenleseeinrichtung und ein verriegelbares Kassenfach zur Aufnahme der Zahlungsmittel.

Die Kassendatenverarbeitungseinrichtung 2 berechnet in Abhängigkeit von den beispielsweise durch Lesen des Barcodes erfassten Artikelidentifikationen einen zu bezahlenden Betrag. Sofern ein auf einem Artikel aufgebrachter Barcode nicht lesbar ist, wird üblicherweise eine Artikelidentifikation manuell über die Tastatur 5 erfasst. Der Bildschirm 4 zeigt die erfassten Artikel und den berechneten zu zahlenden Betrag an. Die Bezahlung erfolgt beispielsweise bar, wobei über eine Eingabevorrichtung, beispielsweise die Tastatur 5, der bezahlte Barbetrag erfasst wird. Die Bezahlung kann aber auch bargeldlos, beispielsweise über Kreditkarten oder über eine spezielle gesicherte Transaktion mit einer zu diesem Zwecke angekoppelten Datenverarbeitungseinrichtung erfolgen.

Der Barcode-Leser 6 kann auch verwendet werden, um einen auf dem Mobiltelefon 9A des Kunden erzeugten Barcode zu lesen, wobei dieser Barcode beispielsweise den Kunden identifiziert.

Die Kassenvorrichtung 1 ist über ein Datenfernübertragungsnetzwerk mit dem Datenverarbeitungssystem 20 gekoppelt. Das Datenverarbeitungssystem 20 umfasst mehrere Server 21 - 25, die innerhalb einer gegen nicht autorisierte Zugriffe geschützten Umgebung, insbesondere innerhalb einer DMZ ("Demilitarized Zone") angeordnet sind. Die verschiedenen Server 21 - 25 kommunizieren sowohl untereinander über vorgegebene Verbindungen 27 - 31 als auch mit Datenverarbeitungssystemen außerhalb der DMZ. Die Kommunikationsverbindungen nach außen, beispielsweise die Verbindungen 12 - 17, sind durch Firewalls 19 gesichert.

Über eine Verbindung 12 ist die Kassendatenverarbeitungseinrichtung 2 der Kassenvorrichtung 1 mit einem ersten Server 24 verbunden, der nachfolgend als Promotion-Server bezeichnet wird. Der Promotion-Server 24 speichert Preisnachlassdatensätze, auch Coupons genannt. Die Preisnachlassdatensätze enthalten einen Preisnachlassdatensatz-Identifizierer (ID), einen Bezeichner, einen Rabatt in Form eines Prozentwerts oder eines Betrags in einer vorgegebenen Währung, Angaben zu einem Gültigkeitszeitraum und optional weitere Textinformationen und Bilder sowie einen Kassenbon-Text. Da der Promotion-Server die Coupons mehrerer Retailer oder Bonusprogramm-Anbieter speichern kann, enthält er außerdem eine Datenstruktur, beispielsweise eine Tabelle, die die Preisnachlassdatensatz-Identifizierer verschiedenen Retailer-Identifizierern zuordnet. Darüber hinaus kann jedem Preisnachlassdatensatz ein interner, d.h. der Kassenvorrichtung und dem Einzelhändler oder Retailer nicht bekannter, Kundenidentifikationscode zugeordnet sein. Beispielsweise enthält der Promotion-Server eine Tabelle mit Preisnachlassdatensätzen sowie eine Zuordnungstabelle, in der die internen Kundenidentifikationscodes aufgelistet und diesen jeweils eine Reihe von Preisnachlassdatensatz-IDs zugeordnet sind. Aus dem Promotion-Server 24 erhält die Kassendatenverarbeitungseinrichtung 2 Preisnachlassdatensätze, die jeweils in Zuordnung zu einem Artikel-Identifizierer einen Preisnachlass eines Artikels kennzeichnen.

Die Kassendatenverarbeitungseinrichtung 2 ist über eine weitere Kommunikationsverbindung 13 mit einem weiteren Server 25 innerhalb der DMZ gekoppelt, wobei dieser weitere Server hier als Payment-Server bezeichnet werden soll. Der Payment-Server 25 erhält von der Kassendatenverarbeitungseinrichtung 2 Daten, die für eine bargeldlose Bezahltransaktion erforderlich sind, wie beispielweise eine Kundenidentifikation und sogenannte Kassenbon-Daten, das heißt Daten, welche den Inhalt eines Kaufbelegs, nämlich Artikelidentifikation und Einzelpreise sowie verrechnete Preisnachlässe, Summenwerte, Umsatzsteuer und Ähnliches kennzeichnen. Der Payment-Server 25 kommuniziert wiederum über eine weitere externe Verbindung 17, die ebenfalls durch Firewalls 19 geschützt ist, mit einem Rechner 18 eines sogenannten Payment-Providers, welcher für die eigentliche Bezahltransaktion sorgt. Sobald der Payment-Server 25 aufgrund seiner Kommunikation mit dem externen Payment-Provider und aufgrund einer weiteren Kommunikation mit anderen Servern innerhalb der DMZ feststellt, dass die von der Kassendatenverarbeitungseinrichtung angeforderte Bezahltransaktion vorgenommen werden kann, informiert der Payment-Server 25 über die Kommunikationsverbindung 13 die Kassendatenverarbeitungseinrichtung 2 darüber, dass die Bezahlung erfolgreich ist. Die Kommunikation des Payment-Server 25 mit der Kassendatenverarbeitungseinrichtung 2 einerseits sowie mit dem Rechner 18 des externen Payment-Providers andererseits soll hier nicht näher erläutert werden, da diese für die Erfindung nicht wesentlich ist.

Die in Figur 1 separat dargestellten Kommunikationsverbindungen 12 und 13 stellen logisch separate Verbindungen dar, können aber selbstverständlich physisch über dieselbe Datenleitung und über ein beliebiges Datenkommunikationsnetzwerk, beispielsweise über das Internet, ausgeführt werden. Die Kommunikationsverbindungen 12 und 13 sind vorzugsweise VPN-Verbindungen, die das IP verwenden.

Wenn ein Kunde an der Kasse 1 bezahlen möchte, empfängt die über die Kommunikationsverbindung 12 mit dem Promotion-Server 24 gekoppelte Kassendatenverarbeitungseinrichtung 2 über die Eingabevorrichtungen 3 einen erfassten externen Kundenidentifikationscode des Kunden. Der erfasste externe Kundenidentifikationscode wird über Verbindung 12 an den Promotion-Server 24 gesendet. Der Promotion-Server 24 ermittelt unter Verwendung des empfangenen externen Kundenidentifikationscodes einen zugehörigen ersten internen Kundenidentifikationscode und diesem zugeordnete Preisnachlassdatensätze. Anschließend sendet der Promotion-Server 24 die Preisnachlassdatensätze zurück an die Kassendatenverarbeitungseinrichtung 2. Diese Preisnachlassdatensätze, die jeweils in Zuordnung zu einem Artikel-Identifizierer einen Preisnachlass eines Artikels kennzeichnen, werden von der Kassendatenverarbeitungseinrichtung 2 bei der Berechnung des zu bezahlenden Betrags berücksichtigt. Der Promotion-Server 24 speichert eine Vielzahl von Preisnachlassdatensätzen, die jeweils einem Kundenidentifikationscode zugeordnet sind. Bei der bevorzugten Ausführungsform des Kassensystems überträgt der Promotion-Server 24 an die Kassendatenverarbeitungseinrichtung 2 sämtliche Preisnachlassdatensätze, die der Kundenidentifikation zugeordnet sind, und zwar unabhängig davon, welche Artikel der Kunde an der Kasse 1 kauft. Die Kassendatenverarbeitungseinrichtung 2 vergleicht dann die Artikel-Identifizierer der Preisnachlassdatensätze mit den an der Kasse erfassten Artikelidentifikationen der zu kaufenden Artikel. Sobald dort eine Übereinstimmung zwischen einem gekauften Artikel und einem Artikel-Identifizierer eines empfangenen Preisnachlassdatensatzes festgestellt wird, wird der von dem empfangenen Preisnachlassdatensatz spezifizierte prozentuale oder absolute Betrag bei der Berechnung des zu bezahlenden Gesamtbetrags unmittelbar und automatisch berücksichtigt. Preisnachlassdatensätze mit Artikel-Identifizierern, die keinem gekauften Artikel entsprechen, sind somit unverbrauchte Preisnachlassdatensätze und werden nach der Kauftransaktion über die Verbindung 12 zurück an den Promotion-Server 24 übermittelt.

Das Datenverarbeitungssystem 20 umfasst einen Server 22, welcher als Applikations-Server bezeichnet wird. Dieser Applikations-Server erfasst und speichert Kundendaten von Kunden, welche einerseits ein Mobiltelefon oder eine ähnliche mobile Datenkommunikationsvorrichtung besitzen und andererseits entweder über das Mobiltelefon oder - üblicherweise - über einen Computer auf das Internet zugreifen können. Den Kunden wird die Möglichkeit eingeräumt, bargeldlos, aber ohne Geld- oder Kreditkarte, einfach mit Hilfe des Mobiltelefons an solchen Kassen von Ladengeschäften zu bezahlen, die die dafür erforderliche Funktionalität zur Verfügung stellen. Dieses Bezahlen mit Hilfe des Mobiltelefons eines Kunden erfolgt, indem einerseits die Kassenvorrichtung 1 eine Identifikation des Kunden empfängt und andererseits das Mobiltelefon 9B von dem Applikations-Server 22 über eine gesicherte drahtlose Kommunikationsverbindung 15 (beispielsweise https verschlüsselt) Autorisierungsdaten empfängt und diese Autorisierungsdaten ebenfalls an die Kassenvorrichtung 1 weitergeleitet werden. Die Benutzeridentifikation und die Weiterleitung der Autorisierungsdaten bei der Kassenvorrichtung 1 kann beispielsweise über die oben erwähnte Nahfeldkommunikation (NFC) erfolgen. Es ist aber auch denkbar, dass bestimmte Codes auf dem Display des Mobiltelefons 9A angezeigt werden, die dann manuell über die Tastatur 5 der Kassenvorrichtung eingegeben werden. Unter Verwendung der Benutzeridentifikation und der Autorisierungsdaten kommuniziert dann die Kassendatenverarbeitungseinrichtung 2 über die Verbindung 13 mit dem Payment-Server 25, so dass in Folge dieser Kommunikation eine Bezahltransaktion ausgeführt wird. Diese Bezahl-Möglichkeit mit Hilfe eines Mobiltelefons soll hier nicht näher beschrieben werden, da sie nicht Gegenstand der vorliegenden Erfindung ist.

Wie bereits erwähnt, erfasst der Applikations-Server 22 Kundendaten, wie beispielsweise einen Namen und eine Adresse sowie eine Bankkontenverbindung des Kunden, und ordnet dem Kunden einen internen Kundenidentifikationscode zu. Dieser interne Kundenidentifikationscode kann beispielsweise derselbe Code sein, der im oben erwähnten Promotion-Server 24 den Preisnachlassdatensatz-Identifizierern zugeordnet wird. Bei einer bevorzugten Ausführungsform werden die Bankverbindungsdaten der Kunden nicht im Applikations-Server 22 und auch nicht auf einem anderem Server des Datenverarbeitungssystems 20 gespeichert; statt dessen werden die Bankverbindungsdaten bei einem Payment-Provider hinterlegt, der eine eindeutige Payment-Provider-Kundennummer zuordnet und an den Applikations-Server-Betreiber zurückgibt, so dass diese Payment-Provider-Kundennummer, gegebenenfalls zusammen mit einer Kennzeichnung des Payment-Providers, (anstelle der Bankverbindungsdaten) dem internen Kundenidentifikationscode im Applikations-Server 22 zugeordnet werden kann. Damit der Applikations-Server 22 die erforderlichen Daten von dem Kunden erfassen kann, stellt der Kunde ausgehend von seinem Computer 10 eine Verbindung 16 (beispielsweise ebenfalls https-verschlüsselt) zu einem Portal-Server 23 her. Der Portal-Server 23 stellt die mit dem Internet-Auftritt verbundene Funktionalität zur Verfügung, unter anderem auch eine Eingabemaske, die auf dem Bildschirm des Computers 10 des Kunden erzeugt wird. Dabei wird der Kunde aufgefordert, die erforderlichen Kundendaten einzugeben.

Der Portal-Server 23 leitet dann über die Verbindung 31 die Kundendaten an den Applikations-Server 22 weiter, der die Kundendaten in einer Datenbank erfasst. Zum Schutz des Datenverarbeitungssystems 20 weist die Kommunikationsverbindung 16 zwischen dem Computer 10 des Kunden und dem Portal-Server 23 innerhalb der DMZ einen oder mehrere Firewalls 19 auf.

Die Kommunikationsverbindung zwischen dem Computer 10 des Kunden über die Verbindung 16 zum Portal-Server 23 und weiter über die Verbindung 31 zum Applikations-Server 22 dient nicht nur der Erfassung von Kundendaten; über diesen Zugriff hat der Kunde auch die Möglichkeit, auf seinem Computer 10 verschiedene Daten zu betrachten, die mit dem Einkauf und dem Bezahlen über sein Mobiltelefon zusammenhängen. Beispielsweise wird von der Datenverarbeitungseinrichtung 2 der Kasse 1 nach Abschluss des Einkaufs über die Verbindung 13 ein Kassenbon (d.h. Kassenbon-Daten) an den Payment-Server 25 übermittelt, wobei die Daten des Kassenbons über die Verbindung 29 an den Applikations-Server 22 weitergeleitet werden. Dadurch hat der Kunde die Möglichkeit, sich den Kassenbon nach einem Einkauf auf seinem Computer 10 anzusehen, wenn er ein entsprechendes Menü aufruft, welches den Zugriff auf die Kassenbon-Daten im Applikations-Server 22 zur Verfügung stellt. Der Kunde hat somit die Möglichkeit, auf seinem Computer 10 zu betrachten, wann er welche Artikel in welchem Geschäft eingekauft hat.

Darüber hinaus sieht das erfindungsgemäße Kassensystem vor, dass der Kunde auf seinem Computer 10 Einkaufslisten ("Einkaufszettel") erstellt, in denen er Waren (Artikel) erfasst, die er in naher Zukunft einkaufen möchte. Bei diesen Einkaufslisten handelt es sich beispielsweise um tabellenartige Datenstrukturen von Artikelbezeichnungen, ggf. mit Mengenangaben. Dabei brauchen die Angaben der Kunden nicht den exakten Artikelbezeichnungen zu entsprechen. Häufig wird der Kunde einfach Oberbegriffe, wie "Brot", "10 Brötchen", "Obst" oder "Zahnpaste" eingeben. Diese "Einkaufslisten" werden in Zuordnung zu dem internen Kundenidentifikationscode in einem Bereich des Applikations-Servers 22 gespeichert, auf den grundsätzlich nur der Kunde zugreifen kann. Der Kunde hat jedoch die Möglichkeit, während oder nach der Eingabe seiner Einkauflisten auf seinem Computer 10 anzugeben, ob er die Daten der Einkaufslisten an Dritte zur Verfügung stellen möchte oder nicht, wobei der Kunde weiß, dass bei dieser Bereitstellung an Dritte lediglich die artikelbezogenen Daten der "Einkaufslisten" weitergeleitet werden, nicht aber die Kundendaten; der Kunde bleibt dabei anonym. Sofern der Kunde diese Möglichkeit der Freigabe der Daten seiner Einkaufsliste wählt, werden die artikelbezogenen Daten der Einkaufslisten einem Auswertungsprogramm zur Verfügung gestellt. Dieses Auswertungsprogramm, welches beispielsweise auf dem Applikations-Server 22 abgearbeitet wird, analysiert die Einkaufslisten der Kunden, die diese Analyse oder Auswertung gestattet oder freigegeben haben, und leitet daraus Artikelidentifikationsdaten ab, welche für einen Zugriff durch Dritte (nämlich Rabattanbieter - siehe unten) bereitgestellt werden. Bei den abgeleiteten Artikelidentifikationsdaten kann es sich beispielsweise um Listen sämtlicher auf den Einkaufslisten auftauchender Artikelbezeichnungen handeln, wobei diese beispielsweise nach Häufigkeit ihres Auftretens geordnet dargestellt werden können. Es sind darüber hinaus Artikelidentifikationsdaten denkbar, bei welchen angegeben wird, welche Artikel häufig in Kombination mit welchen anderen Artikeln auf den Einkauflisten auftauchen.

Mögliche Interessenten für derartige anonymisierte Artikelidentifikationsdaten und Auswertungen sind beispielsweise Rabattanbieter, wobei unter einem Rabattanbieter hier irgendeine Organisation verstanden werden soll, welche ein Bonusprogramm anbietet. Dies können Hersteller sein, die für ihre Produkte Rabatte oder Boni anbieten. Dies können Retailer sein; es kann sich aber auch um reine Bonusprogrammanbieter handeln, die mit einer Mehrzahl von Retailern oder Herstellern kooperieren. Damit diese Dritten keinen direkten Zugriff auf den die Kundendaten speichernden Applikations-Server 22 haben, enthält das Datenverarbeitungssystem 20 einen weiteren Server, den sogenannten BackOffice-Server 21. Über die Kommunikationsverbindung 26 übermittelt der Applikations-Server 22 dem BackOffice-Server 21 die aus den Artikellisten der Kunden abgeleiteten Artikelidentifikationsdaten, beispielsweise Listenauswertungen, die die Häufigkeit der auf den Artikellisten (das heißt "Einkaufslisten") enthaltenen Artikelbezeichnungen angeben. Eine Datenverarbeitungseinrichtung 11 eines Rabattanbieters kann dann über eine Kommunikationsverbindung 14 auf den BackOffice-Server 21 zugreifen. Die Datenverarbeitungseinrichtung 11 des Rabattanbieters enthält dafür einen sogenannten BackOffice-Client. Selbstverständlich ist das Datenverarbeitungssystem 20 auch bei dieser Kommunikationsverbindung 14 durch Firewalls 19 geschützt.

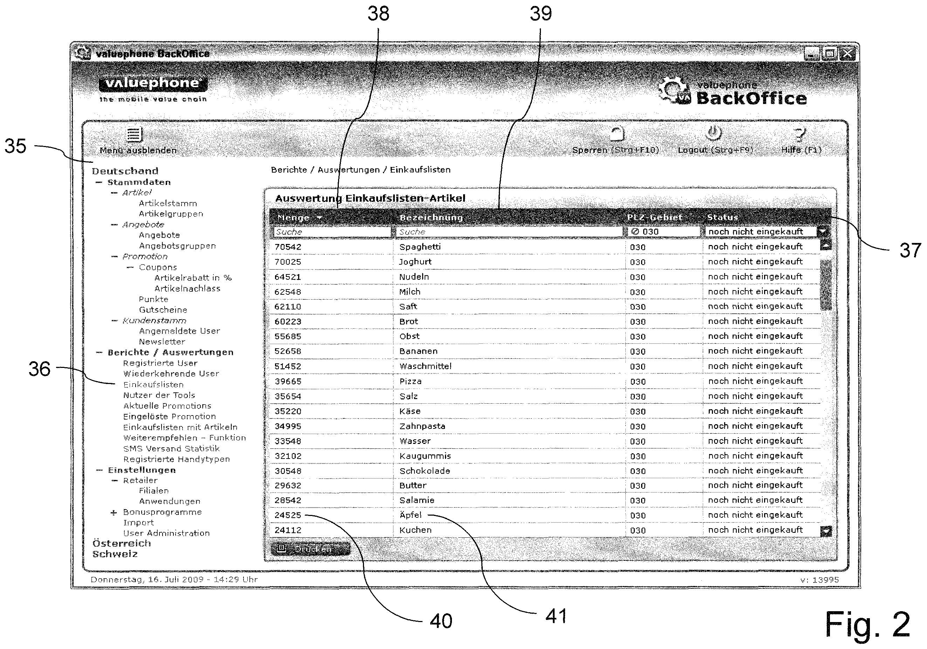

Figur 2 zeigt eine Bildschirmansicht, wie sie beispielsweise auf dem Bildschirm der Datenverarbeitungseinrichtung 11 des Rabattanbieters während des Zugriffs auf den BackOffice-Server 21 erscheinen könnte. Diese Bildschirmansicht enthält auf der linken Seite ein Menü 35, wobei hier der Menüpunkt "Einkaufslisten" 36 ausgewählt ist. Bei Auswahl des Menüpunkts "Einkaufslisten" 36 erscheint auf der rechten Seite des Bildschirms eine Tabelle "Auswertung Einkaufslisten-Artikel" 37. Die Tabelle 37 enthält eine Auswertung, wie oft welche Artikelbezeichnung auf den Einkaufslisten der Kunden erscheint. In der ersten Spalte 38 findet sich eine Häufigkeitsangabe und in der zweiten Spalte 39 die Artikelbezeichnung. In der ersten Zeile ist beispielsweise angegeben, dass die Artikelbezeichnung "Spaghetti" insgesamt 70542 Mal erschien. In der vorletzten Zeile ist beispielsweise im ersten Feld 40 die Zahl "24525" und im zweiten Feld 41 die Bezeichnung "Äpfel" angegeben. Dies bedeutet, dass die Bezeichnung "Äpfel" insgesamt 24525 Mal erschien. Indem diese Informationen den Rabattanbietern zur Verfügung gestellt werden, können diese gezielter Marketing-Aktionen planen, beispielsweise gezielter Coupons, das heißt Rabatte, für solche Produkte anbieten, welche häufig auf den Einkaufslisten erscheinen und somit demnächst von den Kunden häufig gekauft werden.

In einer - hier nicht dargestellten - weiteren Bildschirmmaske, die bei der Kommunikation zwischen der Datenverarbeitungseinrichtung 11 und dem BackOffice-Server 21 auf dem Bildschirm des Rabattanbieters erzeugt wird, können Mitarbeiter des Rabattanbieters Coupons, das heißt Daten von Preisnachlassdatensätzen, generieren. Dies bedeutet, dass der BackOffice-Server 21 über die Kommunikationsverbindung 14 von der Datenverarbeitungseinrichtung 11 Daten empfängt, die Preisnachlässe von bestimmten Artikeln spezifizieren, wobei diese Artikel insbesondere Artikel sein können, die auf den Artikellisten (das heißt den Einkaufslisten der Kunden) enthalten sind. Der BackOffice-Server 21 verarbeitet diese Daten und übermittelt dann diese Daten über die Kommunikationsverbindung 28 an den Promotion-Server 24, der diese in Form der oben genannten Preisnachlassdatensätze speichert. Anders ausgedrückt, in Abhängigkeit von den Eingaben der Rabattanbieter auf deren Datenverarbeitungseinrichtung 11 erzeugt der BackOffice-Server 21 Coupons und übermittelt diese zur Speicherung an den Promotion-Server 24. Dies erfolgt zeitgleich oder nacheinander für eine Reihe von Rabattanbietern, die über verschiedene Kommunikationsverbindungen 14 auf den BackOffice-Server 21 zugreifen. Die Preisnachlassdatensätze der unterschiedlichen Anbieter werden - selbstverständlich mit einer Kennzeichnung der Anbieter - auf den Promotion-Server 24 gespeichert. Die auf diese Weise von dem BackOffice-Server 21 auf dem Promotion-Server 24 erzeugten Preisnachlassdatensätze weisen allerdings noch keine Zuordnung zu einem der Kunden auf.

Um diese Zuordnung der Preisnachlassdatensätze auf dem Promotion-Server 24 zu den Kunden herzustellen (damit der Kunde beim Bezahlen an der Kasse auch in den Genuss des Coupons gelangen kann), ist es erforderlich, den Preisnachlassdatensätzen (Coupons) auf dem Promotion-Server 24 die internen Kundenidentifikationscodes zuzuordnen. Dies erfolgt infolge einer Kommunikation zwischen dem Promotion-Server 24 und dem Applikations-Server 22 über die Verbindung 30 und einer weiteren Kommunikation zwischen dem Mobiltelefon 9B mit dem Applikations-Server 22 über die Verbindung 15 oder einer weiteren Kommunikation zwischen dem Computer 10 des Kunden mit dem Applikations-Server 22 über die Verbindung 16, dem Portal-Server 23 und die Verbindung 31. Zur Zuordnung der Kundenidentifikationscodes zu den in dem Promotion-Server 24 gespeicherten Coupons ist es zunächst erforderlich, dass der Kunde auf seinem Mobiltelefon 9B (oder auf seinem Computer 10) ein Anwendungsprogramm aufruft, welches ihm Informationen über die zur Verfügung stehenden Coupons, das heißt über die auf dem Promotion-Server gespeicherten Preisnachlassdatensätze anzeigt. Sobald der Kunde diese Applikation aufruft, wird dies an den Applikations-Server 22 übermittelt, welcher darauf hin über die Kommunikationsverbindung 30 die zur Verfügung stehenden Preisnachlassdatensätze abruft und darin enthaltene Informationen (nach einer geeigneten Datenaufbereitung) auf dem Display des Mobiltelefons 9B bzw. auf dem Bildschirm des Computers 10 zur Anzeige bringt. Bei einer Ausführungsform könnte dann der Kunde von ihm gewünschte Coupons auswählen, wobei diese Auswahl-Eingabe des Kunden wiederum dem Applikations-Server 22 übermittelt wird, welcher darauf hin dafür sorgt, dass in dem Promotion-Server 24 der interne Kundenidentifikationscode den betroffenen Preisnachlassdatensätzen der von dem Kunden ausgewählten Coupons zugeordnet wird. Bei einer alternativen, bevorzugten Ausführungsform ist es vorgesehen, dass der Kunde lediglich eine Auflistung aller Coupons oder Informationen über das Vorhandensein von Coupons abruft, ihm dann Informationen über sämtliche zur Verfügung stehenden Coupons auf dem Mobiltelefon oder dem Computer angezeigt werden und der Kundenidentifikationscode anschließend auch sämtlichen zur Verfügung stehenden Coupons bzw. Preisnachlassdatensätzen auf dem Promotion-Server 24 zugeordnet wird, ohne dass es zuvor einer Auswahl von Coupons durch den Kunden bedarf.

Alternativ oder zusätzlich ist auch folgende Vorgehensweise bei der Zuordnung einer Kundenidentifikation zu in dem Promotion-Server 24 gespeicherten Preisnachlassdatensätzen (Coupons) denkbar. Nachdem der Kunde (irgendwo) eingekauft hat, werden die Kassenbon-Daten zunächst dem Payment-Server 25 und dann dem Applikations-Server 22 zur Verfügung gestellt. Anschließend kommuniziert der Applikations-Server 22 über die Verbindung 30 mit dem Promotion-Server 24, wobei er den Promotion-Server darüber in Kenntnis setzt, dass der Kunde (der durch einen bestimmten Kundenidentifikationscode gekennzeichnet ist) bestimmte Artikel gekauft hat. Sofern in dem Promotion-Server 24 zu diesen Artikeln Preisnachlassdatensätze (Coupons) vorliegen, so wird diesen Preisnachlassdatensätzen der Kundenidentifikationscode zugeordnet. Dies bedeutet, dass die Zuordnung des Kundenidentifikationscodes zu einem Preisnachlassdatensatz, das heißt die Aktivierung des Preisnachlassdatensatzes, nicht vom Betrachten dieses Preisnachlassdatensatzes (Coupons) durch den Kunden sondern vielmehr vom vorherigen Kauf eines entsprechenden Artikels abhängig ist. Der Kunde erhält dann, beispielweise über SMS, eine Nachricht, dass neue Coupons für ihn zur Verfügung stehen. Er kann sich diese dann auf den Bildschirm seines Computers bzw. auf dem Display seins Mobiltelefons ansehen. Diese beispielsweise per SMS übermittelte Botschaft kann mit einer Nachricht verbunden werden, welche beispielsweise lautet: "Vielen Dank für Ihren Einkauf bei ... (Name des Retailers). Als Dankeschön liegen exklusiv für Sie neue Coupons vor, über die Sie sich mittels unseres Coupon-Managers informieren können".

Es ist auch denkbar, dass die Bereitstellung oder Aktivierung der Coupons im Promotion-Server 24 von einer kumulativen Erfüllung der Bedingungen vorheriger Einkauf eines bestimmten Artikels und vorheriges Ansehen der Coupons durch den Kunden abhängig ist. Darüber hinaus sind eine Reihe weiterer transaktionsabhängiger Bedingungen denkbar, die zur Aktivierung von Coupons in dem Promotion-Server 24, d.h. zur Zuordnung des Kundenidentifikationscodes, führen können.

Sobald die Preisnachlassdatensätze oder Coupons auf dem Promotion-Server 24 aktiviert sind, das heißt ihnen einen Kundenidentifikationscode zugeordnet ist, kann der Kunde diese Coupons bei seinem nächsten Einkauf nutzen. Wenn der Kunde zum Zwecke des Bezahlens an die Kasse 1 tritt und der Kasse seinen Kundenidentifikationscode übermittelt hat, kommuniziert die Datenverarbeitungseinrichtung 2 der Kasse 1 über die Verbindung 12 mit dem Promotion-Server 24, um von dort sämtliche Coupons abzurufen, die dem Kunden zugeordnet sind. Dazu übermittelt die Datenverarbeitungseinrichtung 2 der Kasse 1 den empfangenen externen Kundenidentifikationscode. Der Promotion-Server 24 empfängt diesen externen Code und berechnet daraus den internen Kundenidentifikationscode (der der Kasse 1 nicht bekannt sein darf). Anschließend sieht der Promotions-Server 24 nach, welche Coupons diesen Kundenidentifikationscode zugeordnet sind. Die Coupons werden dann an die Datenverarbeitungseinrichtung 2 übertragen. Die Datenverarbeitungseinrichtung 2 vergleicht dann die Artikel-Identifizierer der Preisnachlassdatensätze mit den Artikelidentifikationen der gekauften Waren (deren Barcodes beispielsweise gerade gescannt worden sind). Sobald sich ein Artikel findet, zu dem ein Coupon vorliegt, wird der zugehörige Rabatt beim Berechnen des zu bezahlenden Betrages berücksichtigt. Coupons mit Artikel-Identifizieren, die keinem gekauften Artikel entsprechen, bleiben unverbraucht und werden nach Abschluss der Kauftransaktion zurück an den Promotion-Server 24 übermittelt (tatsächlich werden selbstverständlich nur die Informationen übermittelt, ob ein Coupon verbraucht wurde oder nicht, damit der Promotion-Server 24 seine Datenbank entsprechend aktualisieren kann).

## Patentansprüche

1. Kassensystem für den Einzelhandel, umfassend:
a) wenigstens eine Kassenvorrichtung (1) eines Einzelhändlers mit einer Kassendatenverarbeitungseinrichtung (2) und Eingabevorrichtungen (3) zum Erfassen eines externen Kundenidentifikationscodes und zum Erfassen einer Artikelidentifikation wenigstens eines Artikels, wobei die Kassendatenverarbeitungseinrichtung (2) in Abhängigkeit von der wenigstens einen erfassten Artikelidentifikation einen zu bezahlenden Betrag berechnet; und
b) ein mit der Kassendatenverarbeitungseinrichtung (2) über ein Datenfernübertragungsnetzwerk (12) gekoppeltes Datenverarbeitungssystem (20), das
von der Kassendatenverarbeitungseinrichtung (2) einen erfassten externen Kundenidentifikationscode empfängt,
unter Verwendung des empfangenen Kundenidentifikationscodes Preisnachlassdatensätze ermittelt, die jeweils in Zuordnung zu einem Artikel-Identifizierer einen Preisnachlass eines Artikels kennzeichnen, und
diese Preisnachlassdatensätze zurück an die Kassendatenverarbeitungseinrichtung (2) sendet,
so dass die Kassendatenverarbeitungseinrichtung (2) die empfangenen Preisnachlassdatensätze bei der Berechnung des zu bezahlenden Betrags berücksichtigt;
wobei das Datenverarbeitungssystem (20) umfasst:
b.1) eine erste Server-Einrichtung (24), die
b.1.1) Preisnachlassdatensatz-Identifizierer enthaltende Preisnachlassdatensätze speichert, denen jeweils ein oder mehrere erste interne Kundenidentifikationscodes zugeordnet werden können, wobei die ersten internen Kundenidentifikationscodes gleich den externen Kundenidentifikationscodes sind oder sich aus diesen eindeutig berechnen lassen,
b.1.2) über das Datenfernübertragungsnetzwerk (12) den erfassten externen Kundenidentifikationscode empfängt,
b.1.3) unter Verwendung des empfangenen externen Kundenidentifikationscodes den zugehörigen ersten internen Kundenidentifikationscode und zugeordnete Preisnachlassdatensätze ermittelt und
b.1.4) die Preisnachlassdatensätze zurück an die Kassendatenverarbeitungseinrichtung (2) sendet; und
b.2) eine mit der ersten Server-Einrichtung (24) gekoppelte zweite Server-Einrichtung (21, 22), die
b.2.1) Kundendaten erfasst, die dem Kunden zugeordnete Artikellisten, die von dem Kunden gewünschte Artikel identifizieren, umfassen, und den Kundendaten einen zweiten internen Kundenidentifikationscode zuordnet,
b.2.2) aus den Artikellisten Artikelidentifikationsdaten ableitet und diese für einen Zugriff durch eine Datenverarbeitungseinrichtung (11) eines Rabattanbieters bereitstellt, ohne dem Rabattanbieter einen Zugriff auf die Kundendaten und den zweiten internen Kundenidentifikationscode zu ermöglichen,
b.2.3) von dem Rabattanbieter Daten empfängt, die Preisnachlässe von wenigstens einem Artikel spezifizieren, der einem auf der Artikelliste enthaltenen Artikel entspricht,
b.2.4) die Preisnachlässe spezifizierenden Daten in Zuordnung zu Daten, die die betroffenen Artikel identifizieren, an die erste Server-Einrichtung (24) übermittelt, die diese Daten als Preisnachlassdatensätze speichert, und
b.2.5) veranlasst, dass den in der ersten Server-Einrichtung (24)gespeicherten Preisnachlassdatensätzen erste interne Kundenidentifikationscodes zugeordnet werden, wobei sie die ersten internen Kundenidentifikationscodes aus den zweiten internen Kundenidentifikationscodes ableitet;
wobei auf die erste Server-Einrichtung (24) nur von der zweiten Server-Einrichtung (21, 22) und der Kassendatenverarbeitungseinrichtung (2) zugegriffen werden kann.

2. Kassensystem nach Anspruch 1, **dadurch gekennzeichnet, dass** den Preisnachlassdatensätzen zusätzlich Identifizierer zugeordneter Einzelhändler zugeordnet sind,
wobei die erste Server-Einrichtung (24)
von der Kassendatenverarbeitungseinrichtung (2) neben dem externen Kundenidentifikationscode auch einen Identifizierer des Einzelhändlers empfängt und
die an die Kassendatenverarbeitungseinrichtung (2) zurückzusendenden Preisnachlassdatensätze auch unter Verwendung des empfangenen Identifizierers des Einzelhändlers ermittelt, und
wobei die zweite Server-Einrichtung (21, 22)
von dem Rabattanbieter neben den die Preisnachlässe spezifizierenden Daten zusätzlich Daten empfängt, die zugeordnete Einzelhändler spezifizieren, und
die Preisnachlässe spezifizierenden Daten auch in Zuordnung zu Daten, die die zugeordneten Einzelhändler identifizieren, an die erste Server-Einrichtung (24) übermittelt.

3. Kassensystem nach Anspruch 1 oder 2, **dadurch gekennzeichnet, dass** die ersten internen Kundenidentifikationscodes gleich den zweiten internen Kundenidentifikationscodes sind und sich die internen Kundenidentifikationscodes aus den externen Kundenidentifikationscodes eindeutig berechnen lassen.

4. Kassensystem nach Anspruch 3, **dadurch gekennzeichnet, dass** die externen Kundenidentifikationscodes durch Verschlüsselung aus den internen Kundenidentifikationscodes abgeleitet sind.

5. Kassensystem nach einem der Ansprüche 1 - 4, **dadurch gekennzeichnet, dass** die erste Server-Einrichtung (24) von der Kassendatenverarbeitungseinrichtung (2) keine erfassten Artikelidentifikationen empfängt und unter Verwendung des empfangenen externen Kundenidentifikationscodes alle zugeordneten Preisnachlassdatensätze unabhängig von den zugeordneten Artikel-Identifizierern ermittelt und zurück an die Kassendatenverarbeitungseinrichtung (2) sendet.

6. Kassensystem nach einem der Ansprüche 1 - 5, **dadurch gekennzeichnet, dass** die zweite Server-Einrichtung (21, 22) gemäß b.2.5) veranlasst, dass den in der ersten Server-Einrichtung (24) gespeicherten Preisnachlassdatensätzen erste interne Kundenidentifikationscodes zugeordnet werden, indem die zweite Server-Einrichtung (21, 22)
die Preisnachlassdatensätze abruft und darin enthaltene Informationen einem Kunden auf Abruf zur Verfügung stellt, so dass der Kunde diese Informationen auf einem mit der zweiten Server-Einrichtung (21, 22) gekoppelten Datenkommunikationsgerät (9B) betrachten kann, und
in Erwiderung des Abrufs der Informationen durch den Kunden der erste oder zweite interne Kundenidentifikationscode an die erste Server-Einrichtung (24) übermittelt und diese veranlasst, dass den Preisnachlassdatensätzen erste interne Kundenidentifikationscodes zugeordnet werden.

7. Kassensystem nach einem der Ansprüche 1 - 5, **dadurch gekennzeichnet, dass** das Datenverarbeitungssystem (20) eine dritte Server-Einrichtung (25) aufweist, wobei die dritte Server-Einrichtung (25)
von der Kassendatenverarbeitungseinrichtung (2) den externen Kundenidentifikationscode sowie Kassenbon-Daten empfängt, die die gekauften Artikel und den bezahlten Kaufpreis identifizieren, und
die Kassenbon-Daten in Zuordnung zu dem Kundenidentifikationscode an die zweite Server-Einrichtung (21, 22) weiterleitet.

8. Kassensystem nach Anspruch 7, **dadurch gekennzeichnet, dass** die zweite Server-Einrichtung (21, 22)gemäß b.2.5) veranlasst, dass den in der ersten Server-Einrichtung (24) gespeicherten Preisnachlassdatensätzen erste interne Kundenidentifikationscodes zugeordnet werden, indem die zweite Server-Einrichtung (21, 22)
die die gekauften Artikel identifizierenden Daten der von der dritten Server-Einrichtung (25) empfangenen Kassenbon-Daten mit den Artikel-Identifizierern von Preisnachlassdatensätzen der ersten Server-Einrichtung (24) vergleicht und bei Übereinstimmung der identifizierten Artikel die Preisnachlassdatensätze abruft und darin enthaltene Informationen einem Kunden auf Abruf zur Verfügung stellt, so dass der Kunde den Inhalt der Preisnachlassdatensätze auf einem mit der zweiten Server-Einrichtung (21, 22) gekoppelten Datenkommunikationsgerät (9B) betrachten und gewünschte Preisnachlassdatensätze auswählen kann, und
Preisnachlassdatensatz-Identifizierer der von dem Kunden ausgewählten Preisnachlassdatensätze zusammen mit dem ersten oder zweiten internen Kundenidentifikationscode an die erste Server-Einrichtung (24) übermittelt und diese veranlasst, dass den entsprechenden Preisnachlassdatensätzen erste interne Kundenidentifikationscodes zugeordnet werden.

9. Kassensystem nach einem der Ansprüche 1 - 8, **dadurch gekennzeichnet, dass** die erste und die zweite Server-Einrichtung (24, 21, 22) innerhalb eines zugriffsgeschützten Computernetzwerks (DMZ) angeordnet sind und die Datenverarbeitungseinrichtung (11) des Rabattanbieters außerhalb des zugriffsgeschützten Computernetzwerks angeordnet ist.

10. Kassensystem nach einem der Ansprüche 1 - 9, **dadurch gekennzeichnet, dass** die Eingabevorrichtungen (3) zum Erfassen des externen Kundenidentifikationscodes einen Scanner umfassen, der einen auf einer mobilen Kommunikationseinrichtung (9A) des Kunden erzeugten den externen Kundenidentifikationscode darstellenden Barcode liest.

11. Kassensystem nach Anspruch 10, **dadurch gekennzeichnet, dass** der Scanner sowohl zum Erfassen des externen Kundenidentifikationscodes als auch zum Erfassen der Artikelidentifikation dient.

12. Kassensystem nach einem der Ansprüche 1 - 11, **dadurch gekennzeichnet, dass** die Eingabevorrichtungen (3) zum Erfassen des externen Kundenidentifikationscodes eine eine Nahfeld-Kommunikation (NFC) (8) mit einer den externen Kundenidentifikationscode speichernden mobilen Kommunikationseinrichtung (9A) des Kunden ausführende NFC-Kommunikationsvorrichtung umfassen.

13. Kassensystem nach einem der Ansprüche 1 - 12, **dadurch gekennzeichnet,**
**dass** die zweite Server-Einrichtung (21, 22) über ein Datenkommunikationsnetzwerk (19) mit einer Datenverarbeitungseinrichtung (10) des Kunden verbunden ist, von der die zweite Server-Einrichtung (21, 22) Kundendaten empfängt, wobei die Kundendaten Daten umfassen, die von dem Kunden gewünschte Artikel identifizieren.

14. Kassensystem nach Anspruch 13, **dadurch gekennzeichnet, dass** die zweite Server-Einrichtung (21, 22) über ein Datenkommunikationsnetzwerk(15) mit einer mobilen Kommunikationseinrichtung (9B) des Kunden verbunden ist, von der die zweite Server-Einrichtung (21, 22) Daten, die von dem Kunden gewünschte Artikel identifizieren, empfangen und an die die zweite Server-Einrichtung (21, 22) Daten, die von dem Kunden gewünschte Artikel identifizieren, übermitteln kann, wobei diese Daten derart ausgetauscht werden, dass die in der mobilen Kommunikationseinrichtung (9B) gespeicherten und anzeigbaren Daten, die von dem Kunden gewünschte Artikel identifizieren, mit der in der zweiten Server-Einrichtung (21, 22) gespeicherten Artikelliste übereinstimmen.

15. Kassensystem nach einem der Ansprüche 1 - 14, **dadurch gekennzeichnet,**
**dass** die zweite Server-Einrichtung (21, 22) einen Kennzeichner erfasst, mit dem angezeigt wird, ob der Kunde eine Weitergabe der Artikellisten-Daten an die Rabattanbieter freigegeben oder gesperrt hat, und
**dass** die zweite Server-Einrichtung (21, 22) aus den Artikellisten abgeleitete Artikelidentifikationsdaten nur dann für einen Zugriff durch eine Datenverarbeitungseinrichtung (11) des Rabattanbieters bereitstellt, wenn der Kennzeichner dies freigibt.

16. Kassensystem nach einem der Ansprüche 1 - 15, **dadurch gekennzeichnet, dass** die zweite Server-Einrichtung (21, 22) zumindest zwei Server umfasst,
wobei ein erster Server (22) der zweiten Server-Einrichtung (24) die Kundendaten mit den Artikellisten erfasst und die zweiten internen Kundenidentifikationscodes zuordnet (b.2.1) und veranlasst, dass den in der ersten Server-Einrichtung (24) gespeicherten Preisnachlassdatensätzen erste interne Kundenidentifikationscodes zugeordnet werden (b.2.5), und
wobei ein zweiter Server (21) der zweiten Server-Einrichtung die Artikelidentifikationsdaten für einen Zugriff durch einen Rabattanbieter bereitstellt (b.2.2), von dem Rabattanbieter die Preisnachlässe spezifizierenden Daten empfängt (b.2.3) und diese Preisnachlässe spezifizierenden Daten an die erste Server-Einrichtung (24) übermittelt (b.2.4).

## Claims

1. A checkout system for the retail trade, comprising:
a) at least one checkout device (1) a of retail trader with a checkout data processing device (2) and input devices (3) for capturing an external customer identification code and for capturing an item identification of at least one item, wherein the checkout data processing device (2) calculates an amount to be paid as a function of the at least one captured item identification; and
b) a data processing system (20) coupled to the checkout data processing device (2) via a remote data transmission network (12), which
receives a captured external customer identification code from the checkout data processing device (2),
determines price reduction data records using the received customer identification code, which data records, in each case assigned to an item identifier, characterize a price reduction of an item, and
sends these price reduction data records back to the checkout data processing device (2),
so that the checkout data processing device (2) takes account of the received price reduction records in the calculation of the amount to be paid;
wherein the data processing system (20) comprises:
b.1) a first server device (24), which
b.1.1) saves price reduction data records containing price reduction data record identifiers, to which one or more first internal customer identification code can be assigned in each case, wherein the first internal customer identification codes are equal to the external customer identification codes or can be calculated unambiguously from the same,
b.1.2) receives the captured external customer identification code via the remote data transmission network (12),
b.1.3) determines the associated first internal customer identification code and assigned price reduction data records using the received external customer identification code, and
b.1.4) sends the price reduction data records back to the checkout data processing device (2); and
b.2) a second server device (21, 22) coupled to the first server device (24), which
b.2.1) captures customer data which comprise item lists assigned to the customer, which identify items desired by the customer, and assigns a second internal customer identification code to the customer data, b.2.2) derives item identification data from the item lists and provides the same for access by a data processing device (11) of a discount provider, without allowing the discount provider access to the customer data and the second internal customer identification code,
b.2.3) receives data from the discount provider, which specify price reductions of at least one item which corresponds to an item contained on the item list,
b.2.4) transmits the data specifying price reductions, assigned to data which identify the relevant items, to the first server device (24) which saves these data as price reduction data records, and
b.2.5) causes first internal customer identification codes to be assigned to the price reduction data records saved in the first server device (24), wherein it derives the first internal customer identification codes from the second internal customer identification codes;
wherein the first server device (24) can only be accessed by the second server device (21, 22) and the checkout data processing device (2).

2. The checkout system according to Claim 1, **characterized in that** identifiers of assigned retail traders are additionally assigned to the price reduction data records,
wherein the first server device (24) also receives an identifier of the retail trader from the checkout data processing device (2) in addition to the external customer identification code, and
the price reduction data records to be sent back to the checkout data processing device (2) are also determined using the received identifier of the retail trader, and
wherein the second server device (21, 22)
additionally receives data from the discount provider in addition to the price reductions, which data specify the assigned retail traders, and
transmits data specifying the price reductions, also assigned to data which identify the assigned retail traders, to the first server device (24).

3. The checkout system according to Claim 1 or 2, **characterized in that** the first internal customer identification codes are equal to the second internal customer identification codes and the internal customer identification codes can be calculated unambiguously from the external customer identification codes.

4. The checkout system according to Claim 3, **characterized in that** the external customer identification codes are derived by encryption from the internal customer identification codes.

5. The checkout system according to one of Claims 1-4, **characterized in that** the first server device (24) does not receive any captured item identifications from the checkout data processing device (2) and determines all assigned price reduction data records independently of the assigned item identifiers using the received external customer identification code and sends the same back to the checkout data processing device (2).

6. The checkout system according to one of Claims 1-5, **characterized in that** the second server device (21, 22) - according to b.2.5) - causes first internal customer identification codes to be assigned to the price reduction data records saved in the first server device (24), **in that** the second server device (21, 22)
requests the price reduction data records and makes information contained therein available to a customer upon request, so that the customer can view this information on a data communication device (9B) coupled to the second server device (21, 22), and
in response to the request for the information by the customer, transmits the first or second internal customer identification code to the first server device (24) and this causes first internal customer identification codes to be assigned to the price reduction data records.

7. The checkout system according to one of Claims 1-5, **characterized in that** the data processing system (20) has a third server device (25), wherein the third server device (25)
receives the external customer identification code and receipt data, which identify the purchased items and the purchase price paid, from the checkout data processing device (2), and
forwards the receipt data, assigned to the customer identification code, to the second server device (21, 22) .

8. The checkout system according to Claim 7, **characterized in that** the second server device (21, 22) - according to b.2.5) - causes first internal customer identification codes to be assigned to the price reduction data records saved in the first server device (24), **in that** the second server device (21, 22)
compares the data identifying the purchased items from the receipt data received from the third server device (25) with the item identifiers of price reduction data records of the first server device (24) and if the identified items match, requests the price reduction data records and makes information contained therein available to a customer upon request, so that the customer can view the content of the price reduction data records on a data communication device (9B) coupled to the second server device (21, 22) and select desired price reduction data records, and
transmits price reduction data record identifiers of the price reduction data records selected by the customer together with the first or second internal customer identification code to the first server device (24) and this causes first internal customer identification codes to be assigned to the corresponding price reduction data records.

9. The checkout system according to one of Claims 1-8, **characterized in that** the first and the second server device (24, 21, 22) are arranged inside an access-protected computer network (DMZ) and the data processing device (11) of the discount provider is arranged outside of the access-protected computer network.

10. The checkout system according to one of Claims 1-9, **characterized in that** the input devices (3) comprise a scanner for capturing the external customer identification code, which reads a barcode created on a mobile communication device (9A) of the customer and representing the external customer identification code.

11. The checkout system according to Claim 10, **characterized in that** the scanner is used both for capturing the external customer identification code and for capturing the item identification.

12. The checkout system according to one of Claims 1 - 11, **characterized in that** the input devices (3) for capturing the external customer identification code comprise an NFC communication device executing near-field communication (NFC) (8) with a mobile communication device (9A) of the customer, which saves the external customer identification code.

13. The checkout system according to one of Claims 1 - 12, **characterized**
**in that** the second server device (21, 22) is connected via a data communication network (19) to a data processing device (10) of the customer, from which the second server device (21, 22) receives customer data, wherein the customer data comprise data which identify the items desired by the customer.

14. The checkout system according to Claim 13, **characterized in that** the second server device (21, 22) is connected to a mobile communication device (9B) of the customer via a data communication network (15), from which the second server device (21, 22) can receive data, which identify items desired by the customer, and to which the second server device (21, 22) can transmit data, which identify items desired by the customer, wherein these data are exchanged in such a manner that the data, which are saved in and can be displayed on the mobile communication device (9B) and identify items desired by the customer, match the item list saved in the second server device (21, 22).

15. The checkout system according to one of Claims 1 - 14, **characterized**
**in that** the second server device (21, 22) captures an identifier, using which it is shown whether the customer has released or blocked forwarding of the item list data to the discount provider, and
**in that** the second server device (21, 22) only provides item identification data derived from the item lists for access by a data-processing device (11) of the discount provider if the identifier releases this.

16. The checkout system according to one of Claims 1 - 15, **characterized in that** the second server device (21, 22) comprises at least two servers,
wherein a first server (22) of the second server device (24) captures the customer data with the item lists and assigns the second internal customer identification codes (b.2.1) and causes first internal customer identification codes to be assigned to the price reduction data records saved in the first server device (24) (b.2.5), and
wherein a second server (21) of the second server device provides the item identification data for access by a discount provider (b.2.2), receives data specifying the price reductions from the discount provider (b.2.3) and transmits these data specifying price reductions to the first server device (24) (b.2.4).

## Revendications

1. Système de caisse pour la vente au détail, comprenant :
a) au moins un dispositif de caisse (1) d'un détaillant avec un système de traitement des données de caisse (2) et des dispositifs d'entrée (3) pour la saisie d'un code d'identification de clients externe et pour la saisie d'une identification des articles d'au moins un article, sachant que le système de traitement des données de caisse (2) calcule un montant à payer en fonction d'au moins une identification d'articles saisie, et
b) un système de traitement des données (20) couplé au système de traitement des données de caisse (2) par le biais d'un réseau de transmission des données (12), qui
reçoit un code d'identification des clients externe saisi par le système de traitement des données de caisse (2),
détermine des jeux de données de rabais en utilisant le code d'identification de clients reçu, qui identifient respectivement un rabais d'un article en attribution à un identifiant d'article, et
renvoie ces jeux de données de rabais au système de traitement des données de caisse (2),
de telle manière que le système de traitement des données de caisse (2) tient compte des jeux de données de rabais reçus lors du calcul du montant à payer,
sachant que le système de traitement de données (20) comprend :
b.1) un premier système de serveurs (24), qui
b.1.1) mémorise les jeux de données de rabais contenant l'identifiant de jeu de données de rabais, auxquels peuvent être attribués respectivement un ou plusieurs premiers codes d'identification de clients internes, sachant que les premiers codes d'identification de clients internes sont identiques aux codes d'identification de clients externes ou peuvent être calculés clairement à partir de ceux-ci,
b.1.2) reçoit le premier code d'identification de clients externe saisi par le réseau de télétransmission de données (12),
b.1.3) détermine le premier code d'identification de clients interne correspondant et les jeux de données de rabais attribués en utilisant le code d'identification de clients externe reçu, et
b.1.4) renvoie les jeux de données de rabais au système de traitement des données de caisse (2), et
b.2) un deuxième système de serveurs (21, 22) couplé au premier système de serveurs (24), qui
b.2.1) saisit les données de clients, qui comprennent les listes d'articles attribuées au client, qui identifient les articles souhaités par le client et attribue les données de clients à un deuxième code d'identification de clients interne,
b.2.2) dérive des données d'identification d'articles à partir de listes d'articles et fournit celles-ci pour un accès par un système de traitement de données (11) d'un fournisseur de rabais, sans permettre au fournisseur de rabais un accès aux données de clients et au deuxième code d'identification de clients interne,
b.2.3) reçoit du fournisseur de rabais des données qui spécifient les rabais d'au moins un article, qui correspond à un des articles contenus dans la liste des articles,
b.2.4) transmet les données spécifiant les rabais en association aux données, qui identifient les articles concernés, au premier système de serveurs (24), qui mémorise ces données sous la forme de jeux de données de rabais, et
b.2.5) fait en sorte qu'aux jeux de données de rabais mémorisés dans le premier système de serveurs (24) sont attribués des premiers codes d'identification de clients, sachant qu'il dérive les premiers codes d'identification de clients internes à partir des deuxièmes codes d'identification de clients internes,
sachant qu'il ne peut être accédé au premier système de serveurs (24) que par le deuxième système de serveurs (21, 22) et le système de traitement de données de caisse (2).

2. Système de caisse selon la revendication 1, **caractérisé en ce que** des identifiants des détaillants attribués sont attribués en plus aux jeux de données de rabais,
sachant que le premier système de serveurs (24) reçoit également du système de traitement de données de caisse (2) en plus du code d'identification de clients externe, un identifiant du détaillant, et
détermine les jeux de données de rabais à renvoyer au système de traitement des données de caisse (2) également en utilisant l'identifiant reçu du détaillant, et
sachant que le deuxième système de serveurs (21, 22) reçoit du fournisseur de rabais en plus des données spécifiant les rabais des données en plus qui spécifient les détaillants attribués, et
transmet au premier système de serveurs (24) les données spécifiant les rabais également en association aux données, qui identifient les détaillants attribués.

3. Système de caisse selon la revendication 1 ou 2, **caractérisé en ce que** les premiers codes d'identification des clients internes sont identiques aux deuxièmes codes d'identification des clients internes et les codes d'identification des clients internes peuvent être clairement calculés à partir des codes d'identification des clients externes.

4. Système de caisse selon la revendication 3, **caractérisé en ce que** les codes d'identification des clients externes sont dérivés par codification tirée des codes d'identification des clients internes.

5. Système de caisse selon l'une quelconque des revendications 1 - 4, **caractérisé en ce que** le premier système de serveurs (24) ne reçoit aucune identification d'articles du système de traitement des données de caisse (2) et détermine tous les jeux de données de rabais attribués en utilisant le code d'identification de clients externe reçu indépendamment des identifiants d'articles attribués et les renvoie au système de traitement des données de caisse (2).

6. Système de caisse selon l'une quelconque des revendications 1 - 5, **caractérisé en ce que** le deuxième système de serveurs (21, 22) fait en sorte selon b.2.5) que les premiers codes d'identification de clients internes soient attribués aux jeux de données de rabais mémorisés dans le premier système de serveurs (24), le deuxième système de serveurs (21, 22)
appelant les jeux de données de rabais et mettant à disposition d'un client sur appel les informations contenues dedans de telle manière que le client peut regarder ces informations sur un appareil de télécommunication de données (9B) couplé au deuxième système de serveurs (21, 22), et
transmet en réponse à l'appel des informations par le client, le premier ou le deuxième code d'identification de clients interne au premier système de serveurs (24) et celui-ci fait en sorte que les premiers codes d'identification de clients soient attribués aux jeux de données de rabais.

7. Système de caisse selon l'une quelconque des revendications 1 - 5, **caractérisé en ce que** le système de traitement des données (20) comporte un troisième système de serveurs (25), sachant que le troisième système de serveurs (25)
reçoit du système de traitement des données de caisse (2) le code d'identification de clients ainsi que des données de bon de caisse, qui identifient les articles achetés et le prix d'achat payé, et
transmet les données de bon de caisse en association au code d'identification de clients au deuxième système de serveurs (21, 22).

8. Système de caisse selon la revendication 7, **caractérisé en ce que** le deuxième système de serveurs (21, 22) fait en sorte selon b.2.5) que les premiers codes d'identification de clients internes soient attribués aux jeux de données de rabais mémorisés dans le premier système de serveurs (24), le deuxième système de serveurs (21, 22)
comparant les données identifiant les articles achetés des données du bon de caisse reçues par le troisième système de serveurs (25) aux identifiants d'articles des jeux de données de rabais du premier système de serveur (24) et en cas de concordance des articles identifiés appelle les jeux de données de rabais et met à disposition du client sur appel les informations contenues dedans de telle sorte que le client peut regarder le contenu des jeux de données de rabais sur un appareil de télécommunication de données (9B) couplé au deuxième système de serveurs (21, 22) et peut choisir les jeux de données de rabais souhaités, et
transmet des identifiants de jeu de données de rabais des jeux de données de rabais choisis par le client avec le premier ou le deuxième code d'identification de clients interne au premier système de serveurs (24) et celui-ci fait en sorte que les premiers codes d'identification de clients internes soient attribués aux jeux de données de rabais correspondants.

9. Système de caisse selon l'une quelconque des revendications 1 - 8, **caractérisé en ce que** le premier et le deuxième système de serveurs (24, 21, 22) sont disposés à l'intérieur d'un réseau informatique à accès protégé (DMZ) et le système de traitement des données (11) du fournisseur de rabais est disposé en dehors du réseau informatique à accès protégé.

10. Système de caisse selon l'une quelconque des revendications 1 - 9, **caractérisé en ce que** les dispositifs d'entrée (3) pour la saisie du code d'identification de clients externe comprennent un analyseur qui lit un code à barres représentant le code d'identification de clients externe produit sur un système de télécommunication mobile (9A) du client.

11. Système de caisse selon la revendication 10, **caractérisé en ce que** l'analyseur sert aussi bien à la saisie du code d'identification de clients externe qu'à la saisie de l'identification des articles.

12. Système de caisse selon l'une quelconque des revendications 1 - 11, **caractérisé en ce que** les dispositifs d'entrée (3) pour la saisie du code d'identification de clients externe comprennent un dispositif de télécommunication à champ proche (TCP) exécutant une télécommunication TCP (8) avec un système de télécommunication mobile (9A) du client mémorisant le code d'identification de clients externe.

13. Système de caisse selon l'une quelconque des revendications 1 - 12, **caractérisé**
**en ce que** le deuxième système de serveurs (21, 22) est relié à un système de traitement des données (10) du client par un réseau de télécommunication de données (19) à partir duquel le deuxième système de serveurs (21, 22) reçoit les données du client, sachant que les données du client comprennent des données qui identifient les articles souhaités par le client.

14. Système de caisse selon la revendication 13, **caractérisé en ce que** le deuxième système de serveurs (21, 22) est relié à un système de télécommunication mobile (9B) du client par un réseau de télécommunication de données (15), à partir duquel le deuxième système de serveurs (21, 22) peut recevoir des données, qui identifient les articles souhaités par le client et auquel le deuxième système de serveurs (21, 22) peut transmettre des données qui identifient les articles souhaités par le client, sachant que ces données sont échangées de telle manière que les données mémorisées et affichables dans le système de télécommunication mobile (9B), qui identifient les articles souhaités par le client, coïncident avec la liste des articles mémorisée dans le deuxième système de serveurs (21, 22).

15. Système de caisse selon l'une quelconque des revendications 1 - 14, **caractérisé**
**en ce que** le deuxième système de serveurs (21, 22) saisit un identifiant avec lequel il est affiché si le client a autorisé ou bloqué une transmission des données de listes d'articles aux fournisseurs de rabais, et
**en ce que** le deuxième système de serveurs (21, 22) ne fournit ensuite un accès par un système de traitement des données (11) du fournisseur de rabais à partir des données d'identification d'articles dérivées des listes d'articles, que si l'identifiant autorisé cela.

16. Système de caisse selon l'une quelconque des revendications 1 - 15, **caractérisé en ce que** le deuxième système de serveurs (21, 22) comprend au moins deux serveurs,
sachant qu'un premier serveur (22) du deuxième système de serveurs (24) saisit les données des clients avec les listes des articles et attribue (b.2.1) les deuxièmes codes d'identification des clients internes et fait en sorte que les premiers codes d'identification des clients sont attribués (b.2.5) aux jeux de données de rabais mémorisés dans le premier système de serveurs (24) et
sachant qu'un deuxième serveur (21) du deuxième système de serveurs fournit les données d'identification des articles pour un accès par un fournisseur de rabais (b.2.2), reçoit (b.2.3) du fournisseur de rabais les données spécifiant les rabais et transmet (b.2.4) ces données spécifiant les rabais au premier système de serveur (24).
